Europäisches Patentamt

European Patent Office

Office européen des brevets

(19)

(11) Numéro de publication: **0 238 387**
**B1**

(12) # FASCICULE DE BREVET EUROPEEN

(45) Date de publication du fascicule du brevet:
**24.05.89**

(51) Int. Cl.⁴: **F16K 31/06, B60T 8/36,
H01F 7/16**

(21) Numéro de dépôt: **87400458.3**

(22) Date de dépôt: **03.03.87**

(54) Electrovalve.

(30) Priorité **19.03.86 FR 8603938**

(43) Date de publication de la demande:
**23.09.87 Bulletin 87/39**

(45) Mention de la délivrance du brevet:
**24.05.89 Bulletin 89/21**

(84) Etats contractants désignés.
**DE ES GB IT**

(56) Documents cités:
**DE-A- 2 052 307
DE-A- 2 657 197
FR-A- 2 139 491
FR-A- 2 276 522**

(73) Titulaire: **BENDIX France, 126, rue de Stalingrad,
F-93700 Drancy(FR)**

(72) Inventeur: **Kervagoret, Gilbert, 5 Impasse Nobleterre,
F-95100 Argenteuil(FR)**

(74) Mandataire: **Lejet, Christian et al, Division Technique
Service Brevets BENDIX Europe 126, rue de Stalingrad,
F-93700 Drancy(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Description

La presente invention concerne les électrovalves du type comprenant une embase de montage comportant un premier alésage axial, une pièce supérieure comportant un second alésage axial, supportée sur l'embase, concentriquement à celle-ci, par une pièce support tubulaire et maintenue en position par un couvercle, une bobine entourant au moins une partie axiale de la pièce supérieure, et un premier et un second inserts montés respectivement dans les premier et second alésages axiaux et formant butées pour les extrémités axialement opposées formant moyens de clapets d'une structure de plongeur sollicitée élastiquement et comportant un passage de fluide traversant, au moins le premier insert comportant un passage de fluide interne débouchant dans un siège de clapet obturable par le moyen de clapet adjacent de la structure de plongeur.

Une électrovalve de ce type est décrite dans le document FR-A-1 542 398. Dans ce document, la pièce supérieure constitue la pièce polaire et est supportée sur la pièce support tubulaire qui forme le corps de l'électrovalve et définit, au-dessus de l'embase, une cavité interne pour une structure d'armature complexe supportée et guidée par des ressorts plats bridés périphériquement dans la pièce support formant corps, dans un agencement délicat et coûteux.

La présente invention a pour objet de proposer des perfectionnements aux électrovalves de ce type, de conception simplifiée, qui soient robustes, fiables, et précises tout en convenant à une production en grande série et autorisant de nombreuses adaptations conservant un grand nombre de pièces communes de faibles coûts de fabrication et d'assemblage.

Pour ce faire, selon une caractéristique de l'invention, l'embase, réalisée en matériau à caractéristiques magnétiques, comprend une partie cylindrique intérieure formant pièce polaire s'étendant en saillie axialement dans la bobine, vers la pièce supérieure, et formée avec un troisième alésage coaxial, aux premier et second alésages, la structure de plongeur comprenant un noyau cylindrique en matériau magnétique coulissant dans le premier alésage formé dans la pièce supérieure et coopérant en contact d'engagement avec une pièce de prolongement tubulaire en matériau amagnétique comportant un passage de fluide interne et coulissant dans le troisième alésage formé dans la partie intérieure en saillie de l'embase.

Selon une autre caractéristique de l'invention, la pièce support tubulaire est un tube en matériau amagnétique dans lequel sont montés de façon étanche les extrémités en regard de la pièce supérieure et de la partie en saillie intérieure de l'embase qui comportent typiquement chacune un joint annulaire périphérique et un épaulement radial périphérique avec lequel coopère en butée l'extrémité correspondante du tube support, l'ensemble étant verrouillé en position par le couvercle constitué d'une pièce tubulaire en matériau à caractéristiques magnétiques comportant un fond portant en appui contre un épaulement externe de la pièce supérieure et dont le bord libre est serti sur l'embase de montage, en rebouclant ainsi le flux magnétique.

D'autres caractéristiques de l'invention ressortiront des revendications 5 à 12. D'autres avantages de la présente invention ressortiront de la description suivante de mode de réalisation, donnés à titre illustratif, faite en relation avec les dessins annexés, sur lesquels :

- la figure 1 est une vue en coupe longitudinale d'une électrovalve selon l'invention aménagée pour constituer une électrovalve de coupure ; et
- la figure 2 est une vue en coupe longitudinale identique à la figure 1 montrant une électrovalve selon l'invention aménagée pour constituer une électrovalve de distribution à trois voies.

Dans la description qui va suivre et sur les dessins, les éléments identiques ou analogues portent les mêmes chiffres de référence, éventuellement indicés.

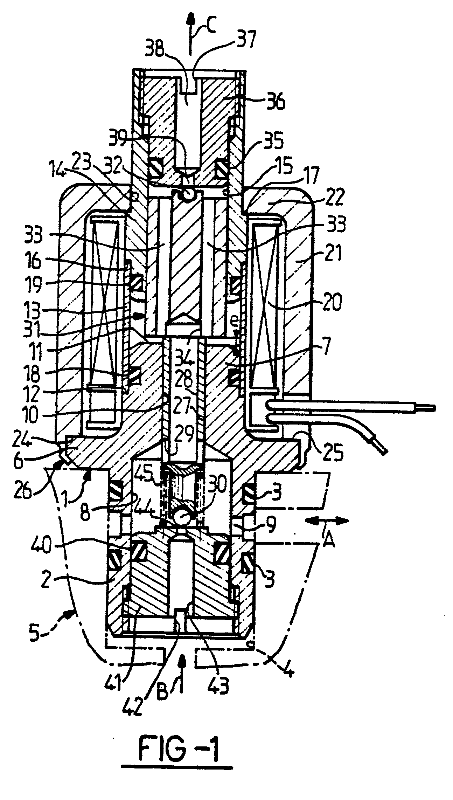

Comme on le voit sur la figure 1, l'électrovalve selon l'invention comprend une embase de montage, désignée généralement par la référence 1 comportant une partie en saillie tubulaire extérieure 2 destinée à être engagée de façon étanche, par des joints tels que 3, dans un puits 4 d'un bloc de distribution 5 comportant au moins deux passages de fluide A et B débouchant en des endroits distincts dans le puits 4. Conformément à l'invention, l'embase de montage 1 comprend une partie de collerette intermédiaire d'assemblage 6 et une partie en saillie tubulaire 7 s'étendant dans la direction opposée à la partie en saillie tubulaire extérieure 2, l'embase de montage 1 étant réalisée en matériau magnétique, par exemple en fer pur. La partie en saillie extérieure 2 est formée intérieurement avec un premier alésage 8 définissant une chambre interne dans laquelle débouchent, entre les joints 3, des ouvertures radiales 9 communiquant avec le passage de fluide A. La partie en saillie intérieure 7 est formée avec un alésage traversant coaxial 10 de plus petit diamètre débouchant dans le premier alésage 8 et dans la face d'extrémité annulaire parfaitement plane 11 de la partie en saillie intérieure 7, laquelle est formée extérieurement avec un épaulement annulaire radial s'étendant vers l'extérieur 12. Sur la partie d'extrémité de la partie en saillie intérieure 7 est emmanché un tube support 13 en matériau amagnétique, par exemple en acier inoxydable, coopérant par son extrémité inférieure avec l'épaulement 12. Dans le tube 13 est emmanchée l'extrémité intérieure cylindrique d'une pièce supérieure tubulaire 14 formée intérieurement avec un alésage axial traversant 15 et, extérieurement, avec un premier épaulement annulaire radial s'étendant vers l'extérieur 16, destiné à coopérer, en configuration assemblée finale, avec l'extrémité supérieure du tube 13, et un second épaulement annulaire radial s'étendant vers l'extérieur 17 destinée à coopérer, comme on le verra plus avant, avec un couvercle d'assemblage. L'espace intérieur au tube 13 entre la partie en saillie intérieure 7 de l'embase 1 et la pièce supérieure 14, est rendu étanche vis-à-vis de l'extérieur par des joints annulaires 18 et 19 portés par la partie en saillie 7 et la pièce supérieure 14. Autour de l'extrémité intérieure de la pièce supérieure 14, du tube 13 et de la partie en saillie intérieure 7 de l'embase 6 est disposé un bobinage électrique 20. Sur l'ensemble coaxial ainsi formé est engagé un couvercle 21 en matériau à caractéristique magnétique, typiquement en acier doux, comportant une partie de fond 22 pourvue d'un alésage central 23 engagé sur la pièce supérieure 14 de façon que la partie de fond 22 vienne porter en appui contre l'épaulement 17, le bord libre de la partie cylindrique du couvercle 21 comportant un épaulement annulaire 24 venant porter sur la face supérieure dressée 25 de la partie de collerette 6 de l'embase 1 et un bord d'extrémité aminci serti sur cette partie de collerette comme figuré en 26, pour assurer l'assemblage des éléments de l'électrovalve précédemment décrits.

Conformément à un aspect de l'invention, dans l'alésage 10 de la partie en saillie intérieure 7 de l'embase 1 est montée à coulissement une pièce tubulaire 27 en matériau amagnétique, par exemple en acier inoxydable ou en alliage d'aluminium, formée intérieurement, sur une partie de sa longueur, avec un alésage axial borgne 28 d'extension axiale supérieure à l'extension axiale de l'alésage 10 et communiquant avec l'extérieur, au voisinage de sa partie de fond, par des lumières radiales 29. L'extrémité de la pièce tubulaire 27 opposée à l'ouverture débouchante de l'alésage 28 et s'étendant dans l'alésage 8 porte un moyen de clapet 30, constitué typiquement par une bille sertie dans l'extrémité de la pièce tubulaire 27. Dans l'alésage 15 de la pièce supérieure 14 est monté à coulissement un noyau cylindrique 31 en matériau à haute caractéristique magnétique, par exemple en fer pur, un moyen de clapet 32 étant formé à l'extrémité supérieure du noyau 31, par exemple sous la forme d'une bille sertie. Dans le noyau 31 sont formés au moins un, typiquement au moins deux canaux axiaux 33 débouchant, à la partie supérieure du noyau 31, de part et d'autre du moyen de clapet 32 et, communiquant avantageusement, à la partie inférieure du noyau 31, avec une chambre d'extrémité interne 34 en regard de l'extrémité débouchante de l'alésage borgne 28 de la pièce tubulaire 27.

Dans l'extrémité supérieure de l'alésage 15 de la pièce supérieure 14 est monté de façon étanche, au moyen d'un joint 35, un insert tubulaire 36 comportant un filetage externe coopérant avec un taraudage formé dans l'extrémité supérieure de l'alésage 15, l'insert 36 comportant une fente d'extrémité 37 permettant son vissage dans l'alésage 15. Dans le mode de réalisation de la figure 1, l'insert 36 comporte un passage axial traversant 38 débouchant dans l'extrémité inférieure de l'insert 36 en formant un siège de clapet 39 destiné à coopérer avec le moyen de clapet adjacent 32 formé à l'extrémité supérieure du noyau 31. De façon similaire, dans l'alésage 8 est monté, de façon étanche au moyen d'un joint 40, un insert 41 comportant un filetage externe coopérant avec un taraudage formé dans l'extrémité inférieure de l'alésage 8 et pourvu d'une fente 42 permettant son vissage. Dans le mode de réalisation de la figure 1, l'insert 41 est formé avec un passage axial traversant 43 débouchant dans sa face d'extrémité supérieure en formant un siège de clapet 44 destiné à coopérer avec le moyen de clapet 30 formé à l'extrémité de la pièce tubulaire 27. Un ressort de sollicitation 45 est monté entre la face d'extrémité intérieure de l'insert 41 et un épaulement périphérique de la pièce tubulaire 27 de façon à solliciter cette dernière en appui contre la face inférieure du noyau 31 et, partant, ce dernier en appui, via son moyen de clapet 32, contre le siège 39 dans la face d'extrémité intérieure de l'insert supérieur 36. On comprendra aisément qu'en réglant séparément chacun des deux inserts 36 et 41 on peut régler avec précision l'entrefer entre la face d'extrémité 11 de la partie en saillie intérieure 7 de l'embase 1 et la face d'extrémité adjacente, dressée avec précision du noyau 31, ainsi que la levée de clapet entre le siège 44 de l'insert 41 et le moyen de clapet 30 à l'extrémité inférieure de la pièce tubulaire 27, indépendamment des tolérances de fabrication propres des pièces constitutives de l'ensemble statique constitué par l'embase 1, le tube 13, la pièce supérieure 14 et le couvercle 21. On notera également que, aussi petit que soit réglé l'entrefer e, la disposition des passages de fluide 33,34 et 28 permet un écoulement de fluide non laminé entre l'alésage 8 et l'alésage 15.

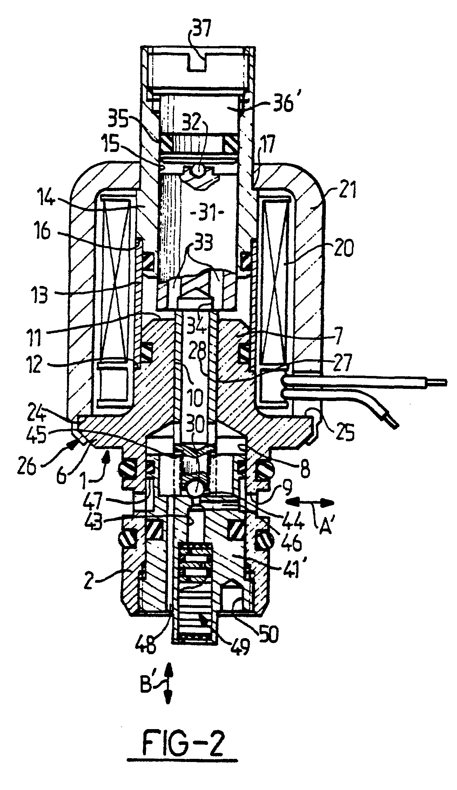

Comme sus-mentionné, l'agencement selon l'invention autorise de nombreuses adaptations en conservant l'ensemble statique décrit ci-dessus. On a ainsi représenté sur la figure 2 une adaptation de l'électrovalve décrite précédemment en relation avec la figure 1. Dans cette variante de la figure 2, l'insert supérieur 36' est ici plein, sa face d'extrémité intérieure ne servant que d'appui pour le moyen de clapet 32 à l'extrémité supérieure du noyau 31 en vue du réglage de l'électrovalve. L'insert inférieur 41' comporte par contre, ici, une portion de passage de fluide transversal 46 établissant une communication entre le passage axial central 43 débouchant dans le siège de clapet 44 et une gorge annulaire périphérique 47 communiquant avec les ouvertures radiales 9, ainsi qu'un second passage traversant axial 48 débouchant directement dans la chambre interne formée par l'alésage 8 de l'embase 1, parallèlement au premier passage axial central 43, lequel comporte typiquement, dans une partie d'extrémité élargie, une structure de labyrinthe 49. Dans ce mode de réalisation, l'insert inférieur 41' comprend au moins un orifice 50 pour un outil permettant son vissage dans l'alésage 8.

Les électrovalves selon la présente invention trouvent, du fait de leur petitesse, de leur robustesse, et de leur faible temps de réponse, diverses applications, notamment dans des installations à hautes pression, par exemple dans les circuits de freinage anti-blocage. Dans ce cas, l'agencement d'électrovalve selon la figure 1 sera utilisé comme électrovalve d'isolement et de détente, l'entrée de fluide sous pression s'effectuant par le passage B vers le siège de clapet 44, le passage A étant relié au circuit d'utilisation et le passage C, communiquant avec le siège de clapet 39, étant relié à un réservoir basse pression, l'agencement d'électrovalve selon la figure 2 étant alors utilisé comme électrovalve d'isolement avec une restriction formée par le labyrinthe 49, le passage A', communiquant avec les ouvertures 9, étant relié au passage A susmentionné, le passage de sortie B', avec lequel communique les passages 43 et 48, étant relié aux freins du véhicule.

## Revendications

1. Electrovalve, comprenant une embase de montage (1) comportant un premier alésage axial (8), une pièce supérieure (14) comportant un second alésage axial (15), supportée sur l'embase, concentriquement à celle-ci, par une pièce support tubulaire (13) et maintenue en position par un couvercle (21), une bobine (20) entourant au moins une partie axiale de la pièce supérieure (14), et un premier (41; 41') et un second (36; 36') inserts montés respectivement dans les premier (8) et second (15) alésages et formant butées pour les extrémités axialement opposées formant moyens de clapets (30, 32) d'une structure de plongeur (31–27) sollicitée élastiquement (45) et comportant un passage de fluide traversant (33, 28), au moins le premier insert (41; 41') comportant un passage de fluide interne (43) débouchant dans un siège de clapet (44) obturable par le moyen de clapet adjacent (30) de la structure de plongeur, caractérisée en ce que l'embase de montage (1) comprend une partie cylindrique intérieure (7) formant pièce polaire, s'étendant en saillie axialement dans la bobine (20), vers la pièce supérieure (14), et formée avec un troisième alésage (10) coaxial aux premier (8) et second (15) alésages, la structure de plongeur comprenant un noyau cylindrique (31) coulissant dans le premier alésage (15) et coopérant en contact d'engagement avec une pièce de prolongement tubulaire (27) en matériau amagnétique comportant un passage interne (28) et coulissant dans le troisième alésage (10).

2. Electrovalve selon la revendication 1, caractérisée en ce que la pièce support tubulaire (13) est un tube en matériau amagnétique dans lequel sont montées de façon étanche les extrémités en regard de la pièce supérieure (14) et de la partie en saillie intérieure (7) de l'embase (1).

3. Electrovalve selon la revendication 2, caractérisée en ce que les extrémités en regard de la pièce supérieure (14) et de la partie en saillie intérieure (7) de l'embase (1) comportent chacune un joint annulaire périphérique (19; 18) et un épaulement radial périphérique (16; 12) avec lequel coopère en butée l'extrémité correspondante du tube (13).

4. Electrovalve selon la revendication 3, caractérisée en ce que le couvercle (21) est constitué d'une pièce tubulaire en matériau magnétique comportant un fond (22) portant en appui contre un épaulement externe (17) de la pièce supérieure (14), et dont le bord libre est serti (26) sur l'embase de montage (1).

5. Electrovalve selon l'une des revendications 1 à 4, caractérisée en ce que le noyau (31) comporte au moins un passage axial (33) communiquant en permanence avec l'extrémité adjacente du passage interne (28) dans la pièce de prolongement (27).

6. Electrovalve selon la revendication 5, caractérisée en ce que la pièce de prolongement (27) comporte un alésage axial borgne (28) formé sur une partie de sa longueur et au moins un passage radial (29) formé au voisinage de son extrémité formant moyen de clapet (30).

7. Electrovalve selon l'une des revendications précédentes, caractérisée en ce qu'elle comprend un ressort (45) de sollicitation de la structure de plongeur (31, 27) disposé entre la pièce de prolongement (27) et le premier insert (41; 41').

8. Electrovalve selon l'une quelconque des revendications précédentes, caractérisée en ce que le passage interne du premier insert (41') comprend une portion de passage transversal (46) débouchant dans une gorge périphérique (47) du premier insert communiquant avec une ouverture (9) formée dans l'embase (1) et débouchant dans le premier alésage (8).

9. Electrovalve selon la revendication 8, caractérisée en ce que le passage interne du premier insert (41') comprend une portion de passage axial (43) débouchant à l'extérieur du premier insert.

10. Electrovalve selon la revendication 9, caractérisée en ce que le premier insert (41') comprend en outre un ensemble labyrinthe (49) disposé dans la portion de passage axial (43).

11. Electrovalve selon l'une des revendications 8 à 10, caractérisée en ce que le premier insert (41') comprend un second passage interne axial traversant (48).

12. Electrovalve selon l'une des revendications 1 à 7, caractérisée en ce que le second insert (36) comporte un passage de fluide interne (38) débouchant dans un siège de clapet (39) obturable par le moyen de clapet adjacent (32) de la structure de plongeur (31, 27).

## Claims

1. Solenoid valve comprising a mounting base (1) having a first axial bore (8), an upper piece (14) having a second axial bore (15) and supported on the base concentrically relative to the latter by means of a tubular supporting piece (13) and is held in position by means of a cover (21), a coil (20) surrounding at least an axial portion of the upper piece (14), and a first insert (41; 41') and a second insert (36; 36') which are mounted respectively in the first bore (8) and the second bore (15) and which form stops for the axially opposite ends, forming valve means (30, 32), of a plunger structure (31–27) stressed elastically (45) and having a fluid through-passage (33, 28), at least the first insert (41; 41') having an inner fluid passage (43) opening into a valve seat (44) which can be closed off by the adjacent valve means (30) of the plunger structure, characterized in that the mounting base (1) comprises an inner cylindrical part (7) forming a pole piece, projecting axially into the coil (20) towards the upper piece (14), and formed with a third bore (10) co-axially relative to the first bore (8) and second bore (15), the plunger structure comprising a cylindrical core (31) sliding in the first bore (15) and interacting in engagement contact with a tubular extension piece (27) made of non-magnetic material which has an inner passage (28) and which slides in the third bore (10).

2. Solenoid valve according to Claim 1, characterized in that the tubular supporting piece (13) is a tube made of non-magnetic material, in which are mounted sealingly the opposing ends of the upper piece (14) and of the inner projecting part (7) of the base (1).

3. Solenoid valve according to Claim 2, characterized in that the opposing ends of the upper piece (14) and of the inner projecting part (7) of the base (1) each have a peripheral annular gasket (19; 18) and a peripheral radial shoulder (16; 12), with which the corresponding end of the tube (13) interacts as a stop.

4. Solenoid valve according to Claim 3, characterized in that the cover (21) consists of a tubular piece made of magnetic material, which has a bottom (22) bearing against an outer shoulder (17) of the upper piece (14), and the free edge of which is crimped (26) on the mounting base (1).

5. Solenoid valve according to any of Claims 1 to 4, characterized in that the core (31) has at least one axial passage (33) communicating permanently with the adjacent end of the inner passage (28) in the extension piece (27).

6. Solenoid valve according to Claim 5, characterized in that the extension piece (27) has a blind axial bore (28) formed over some of its length and at least on radial passage (29) made in the vicinity of its end forming a valve means (30).

7. Solenoid valve according to one of the preceding Claims, characterized in that it has a spring (45) which stresses the plunger structure (31, 27) and which is arranged between the extension piece (27) and the first insert (41; 41').

8. Solenoid valve according to any of the preceding Claims, characterized in that the inner passage of the first insert (41') has a transverse passage portion (46) which opens into a peripheral groove (47) of the first insert communicating with a port (9) formed in the base (1) and opening onto the first bore (8).

9. Solenoid valve according to Claim 8, characterized in that the inner passage of the first insert (41') has an axial passage portion (43) opening outside the first insert.

10. Solenoid valve according to Claim 9, characterized in that the first insert (41') also has a labyrinth assembly (49) arranged in the axial passage portion (43).

11. Solenoid valve according to one of Claims 8 to 10, characterized in that the first insert (41') has a second inner axial through-passage (48).

12. Solenoid valve according to one of Claims 1 to 7, characterized in that the second insert (36) has an inner fluid passage (38) opening into a valve seat (39) which can be closed off by the adjacent valve means (32) of the plunger structure (31, 27).

## Patentansprüche

1. Elektromagnetventil mit einem Grundkörper (1), der eine erste axiale Bohrung (8) aufweist, einem oberen Teil (14), das eine zweite axiale Bohrung (15) aufweist und am Grundkörper konzentrisch zu diesem von einem rohrförmigen Tragkörper (13) abgestützt und durch einen Deckel (21) in seiner Lage gehalten wird, einer Wicklung (20), die zumindest einen axialen Abschnitt des oberen Teils (14) umgibt, und einem ersten Einsatz (41; 41') sowie einem zweiten Einsatz (36; 36'), die in der ersten Bohrung (8) bzw. in der zweiten Bohrung (15) angeordnet sind und Anschläge bilden für die Ventile (30, 32) bildenden, axial entgegengerichteten Enden einer Kolbenanordnung (31–27), die elastisch (45) vorgespannt ist und einen durchgehenden Strömungskanal (33, 28) aufweist, wobei zumindest der erste Einsatz (41; 41') einen inneren Strömungskanal (43) aufweist, der in einem Ventilsitz (44) mündet, welcher durch das angrenzende Ventil (30) der Kolbenanordnung verschließbar ist, dadurch gekennzeichnet, daß der Grundkörper (1) einen ein Polstück bildenden zylindrischen inneren Abschnitt (7) aufweist, der axial in die Wicklung (20) in Richtung auf das obere Teil (14) vorsteht und mit einer dritten Bohrung (10) versehen ist, die koaxial zur ersten und zweiten Bohrung (8, 15) verläuft, wobei die Kolbenanordnung einen zylindrischen Kern (31) aufweist, der in der ersten Bohrung (15) gleitet und anlagemäßig mit einem rohrförmigen Verlängerungsteil (27) aus unmagnetischem Material zusammenwirkt, das einen inneren Kanal (28) aufweist und in der dritten Bohrung (10) gleitet.

2. Elektromagnetventil nach Anspruch 1, dadurch gekennzeichnet, daß das rohrförmige Tragteil (13) ein Rohr aus unmagnetischem Material ist, in welchem die einander zugewandten Enden des oberen Teils (14) und des vorstehenden inneren Abschnitts (7) des Grundkörpers (1) abgedichtet angebracht sind.

3. Elektromagnetventil nach Anspruch 2, dadurch gekennzeichnet, daß die einander zugewandten Enden des oberen Teils (14) und des vorstehenden inneren Abschnitts (7) des Grundkörpers (1) jeweils eine ringförmige Umfangsdichtung (19; 18) und eine radiale Umfangsschulter (16; 12) aufweisen, mit der das entsprechende Ende des Rohrs (13) anschlagmäßig zusammenwirkt.

4. Elektromagnetventil nach Anspruch 3, dadurch gekennzeichnet, daß der Deckel (21) von einem Rohrteil aus magnetischem Material gebildet wird, das einen Boden (22) aufweist, der an einer äußeren Schulter (27) des oberen Teils (14) anliegt und dessen freier Rand gegen den Grundkörper (1) umgebördelt ist.

5. Elektromagnetventil nach einem der Ansprüche 1–4, dadurch gekennzeichnet, daß der Kern (31) mindestens einen axialen Kanal (33) aufweist, der mit dem angrenzenden Ende des inneren Kanals (28) in dem Verlängerungsteil (27) permanent in Verbindung steht.

6. Elektromagnetventil nach Anspruch 5, dadurch gekennzeichnet, daß das Verlängerungsteil (27) eine axiale Sackbohrung (28) und mindestens einen radialen Kanal (29) aufweist, von denen die Sackbohrung über einen Teil seiner Länge und der radiale Kanal benachbart zu seinem das Ventil (30) bildenden Ende gebildet ist.

7. Elektromagnetventil nach einem der vorhergehenden Ansprüche, dadurch gekennzeichnet, daß sie zum Vorspannen der Kolbenanordnung (31, 27) eine Feder (45) aufweist, die zwischen dem Verlängerungsteil (27) und dem ersten Einsatz (41; 41') angeordnet ist.

8. Elektromagnetventil nach einem der vorhergehenden Ansprüche, dadurch gekennzeichnet, daß der innere Kanal des ersten Einsatzes (41') einen durchgehenden Kanalabschnitt (46) aufweist, der in einer Umfangsnut (47) des ersten Einsatzes mündet, welcher mit einer Öffnung (9) im Grundkörper (1) in Verbindung steht und in der ersten Bohrung (8) mündet.

9. Elektromagnetventil nach Anspruch 8, dadurch gekennzeichnet, daß der innere Kanal des ersten Einsatzes (41') einen axialen Kanalabschnitt (43) aufweist, der außerhalb des ersten Einsatzes mündet.

10. Elektromagnetventil nach Anspruch 9, dadurch gekennzeichnet, daß der erste Einsatz (41') ferner eine Labyrinthanordnung (49) aufweist, die in dem axialen Kanalabschnitt (43) angeordnet ist.

11. Elektromagnetventil nach einem der Ansprüche 8–10, dadurch gekennzeichnet, daß der erste Einsatz (41') einen durchgehenden inneren axialen zweiten Kanal (48) aufweist.

12. Elektromagnetventil nach einem der Ansprüche 1–7, dadurch gekennzeichnet, daß der zweite Einsatz (36) einen inneren Strömungskanal (38) aufweist, der in einem Ventilsitz (39) mündet, welcher von dem angrenzenden Ventil (32) der Kolbenanordnung (31, 27) verschließbar ist.

FIG -1

FIG-2